# EUROPEAN PATENT SPECIFICATION

(11) **EP 4 393 848 B1**
(45) Date of publication and mention of the grant of the patent: **27.08.2025**
(21) Application number: 23164273.7
(22) Date of filing: 27.03.2023
(51) Int. Cl.: B65G 27/04, B65G 27/32, B65G 43/00

(54) **TROUGH OF A VIBRATING CONVEYOR**
RUTSCHE FUR EINEN VIBRATIONSFORDERER
AUGE DU CONVOYEUR VIBRANT

(30) Priority: 30.12.2022 PL 44335122
(43) Date of publication of application: 03.07.2024
(73) Proprietor: Akademia Gorniczo-Hutnicza im. Stanislawa Staszica w Krakowie, 30-059 Krakow (PL)
(72) Inventor: Bednarski, Lukasz, 25-432 Kielce (PL); Klemiato, Maciej, 37-310 Kraków (PL); Czubak, Piotr, 30-150 Kraków (PL); Cieplok, Grzegorz, 41-400 Mys owice (PL)
(74) Representative: Kuczynska, Teresa

(56) References cited:
- JP-A- 2001 215 146
- JP-A- S59 114 211
- KR-B1- 101 891 515
- US-A- 3 917 050

## Description

The subject of the invention is a trough of a vibrating conveyor, that can be used, among others, in the glass, metallurgical, pharmaceutical industry to transport small portions of bulk material of fine fraction.

Solutions that use equipping the vibrating conveyor troughs with sensors are known for fine-tuning and controlling of their operation, or as the gates, perpendicular to the direction of a transport, to detect a material appearing in the trough or to measure the state of its accumulation. For example, in Chinese patent application CN106743191A, the vibrating conveyor trough is equipped with a sensor detecting the amount of material on the conveyor. The sensor, such as an ultrasonic sensor consisting of a transmitter and a receiver, is placed at the highest allowed height of the material. When the signals received between the sensors change, the situation of exceeding the allowed height of the material is signaled and a control device can change operating parameters of the vibrator to accelerate a transport of a material, and it returns to the initial transport speed after the condition changes again. In one variant of this solution, the control device also has a possibility of monitoring and controlling the inclination of the conveyor trough by means of an additional control unit.

Also known from the German utility model specification DE20108655U1 is an arrangement that monitors and regulates the vibrating conveyor system in such a way that a continuous supply of material is ensured. Detected by sensor technology, the flow intensity is returned as an adjustment quantity to the desired control value and adjusts the conveying capacity to the requirements. The detection of a material flow can be done both as monitoring of the flow quantity and as detection of a blockage, or as minimum or maximum amounts of feed. Any combination of transmitter/sensor, starting from a simple flow sensor or blockage sensor to an optical or photographic system, can be used here as a material flow measurement device.

Similarly, U.S. Patent specification US6273240B 1 discloses a vibrating conveyor control system comprising a detector, such as a photocell, to detect the amount of product being transported on the conveyor, which detector is combined with means for regulating of the flow of material so that its flow rate is maintained at a predetermined value or near this value US3917050A discloses a trough according to the preamble of claim 1.

The presented invention solves the technical problem of evaluating a status of emptying of a vibrating conveyor by previously weighted down portion of material, especially of a fine fraction. A high accuracy (certainty) of such indication of the state of leaving the conveyor by a transported material, which is an important critical additive, e.g. modifying the parameters of the material in the technological process, guarantees achieving the planed result in terms of the material with desired color or mechanical properties or correct concentration of the active substance. The trough according to the invention is defined in claim 1.

The essence of a trough of a vibrating conveyor, containing at least one sensor of a type of transmitter-receiver sensor mounted therein, that is signal-connected by a wired or wireless connection to a microprocessor device, that is the recording and analyzing element and controlling device of the conveyor drive, is in that the trough has a closed cross-section profile, and in that the sensors are distributed evenly in the trough along the entire conveying path, between inlet and outlet openings, wherein one of both elements of each sensor, that is a transmitter or a receiver, is mounted at a bottom, in a horizontal, flat bottom of the trough, and the other corresponding sensor element that is a receiver or a transmitter is mounted in an opposite wall, at a top of the trough.

The trough contains, preferably, electromagnetic sensors such as: optical or laser or microwave sensors, and preferably also the trough contains ultrasonic sensors.

In addition, preferably the distance between the sensors does not exceed the diameter of a base of a bulk cone of a portion of transported material at rest.

Also preferably, side walls of the trough or their lower portions are inclined so that they are converging downwards.

Preferably, the closed profile of the trough in cross-section is circular or elliptical. Preferably, a width of the trough bottom decreases uniformly in the direction from the inlet to the outlet.

The invention makes it possible to detect residual material remaining in the trough, or to indicate the state of complete emptying of the trough from the transported material with a high degree of certainty. Furthermore, it is possible to ensure encapsulation or air-tight sealing of the structure and to use the conveyor as a tank before the conveying cycle.

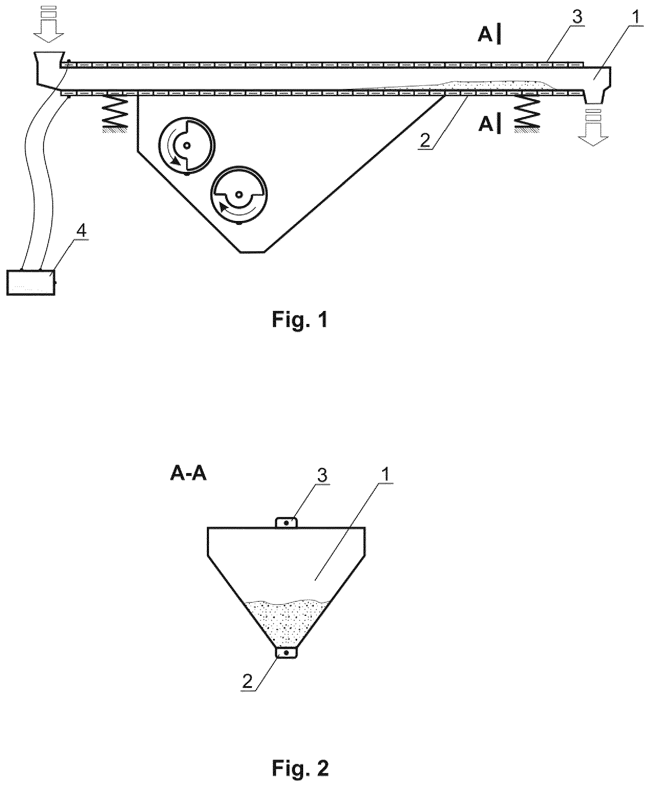

The subject of the invention in the embodiments is presented in the drawing, in which fig. 1 shows a simplified view of the vibrating conveyor during transport of a material, fig. 2 shows a cross-section of the conveyor trough with a polygonal shaped closed cross-section profile.

The trough 1 of a vibrating conveyor (fig. 1) has a closed profile with a cross-section of the polygon shape. Lower parts of side walls of the trough are inclined so that they converge towards its narrow horizontal flat bottom. Along with the distance from the trough 1 inlet towards its outlet a width of the bottom decreases evenly. Electromagnetic - laser- sensors are arranged along the entire transport path, i.e. between the inlet and the outlet in the trough 1. In the bottom of the trough 1 transmitters 2 are mounted and corresponding receivers 3 are mounted above them, in the opposite upper wall (fig. 2), so that in the cross-section of the trough 1, the elements of the "transmitter-receiver" pair, constitute a single sensor unit. The distance between the sensors is constant and amounts to 5 cm, which is a value smaller than a diameter of the base of a heaping cone of the portion of the 4 kg of the transported material, which amounts to about 20 cm under static conditions.

The transmitters 2 and receivers 3 of each sensor are connected by a signal cable to a microprocessor device 4, which constitutes a recording and analyzing element and is controlling the conveyor drive.

In another embodiment, the reverse location of the sensors is used, so that receivers 3 are installed in the bottom of the trough 1, while transmitters 2 are installed at the top.

In yet another embodiment, an alternating configuration of transmitters 2 and receivers 3 is used.

Additional embodiments of the invention are possible, wherein other known sensors are used, such as optical or microwave sensors, as well as ultrasonic sensors.

The main purpose of the device is to detect the complete emptying of the trough 1 without the use of weighing systems and to provide information about the possibility of switching off or automatically switching off the conveyor drive. The signal strength in receivers 3 depends on the amount of the broadcast and its distribution along the trough 1. The signal measured by the individual sensors is recorded and analyzed in the microprocessor device 4, so that it is possible to detect and visualize changes in the distribution of material in the trough 1. The dynamics of changes that is measured can also be used as information for controlling the conveyor drive so as to optimize the speed at which the transported material leaves the trough 1, when it is important in the technological process, for example, when said material is mixed with other ingredients.

## Claims

1. Trough of a vibrating conveyor containing at least one sensor of the type of transmitter-receiver mounted therein that is signal connected in a wired or wireless manner to a microprocessor device that constitutes a recording and analyzing element and element controlling the conveyor drive, **characterized in that** the trough (1) has a closed cross-section profile and the sensors are distributed evenly in the trough (1) along its entire conveying path between inlet and outlet openings, wherein one of the elements of each sensor, such as a transmitter (2) or a receiver (3), is mounted at the trough bottom, in the horizontal flat bottom of the trough (1), and the other corresponding sensor element, such as a receiver (3) or a transmitter (2), is mounted in the opposite wall, in the upper part of the trough (1).

2. The trough according to claim. 1, **characterized in that** it comprise electromagnetic sensors, such as: optical or laser or microwave sensors.

3. The trough according to claim 1, **characterized in that** it comprise ultrasonic sensors.

4. The trough according to claim 1, **characterized in that** the distance between the sensors does not exceed the diameter of a base of a bulk cone of the portion of the transported material at rest.

5. The trough according to claim 1, **characterized in that** the side walls of the trough (1) or their lower parts are inclined so that they are converging downwards.

6. The trough according to claim 1, **characterized in that** the width of the trough (1) decreases evenly in the direction from the inlet to the outlet.

## Patentansprüche

1. Rutsche für einen Vibrationsförderer mit mindestens einem darin angeordneten Sensor vom Typ Sender-Empfänger, der drahtgebunden oder drahtlos mit einer Mikroprozessoreinrichtung signalverbunden ist, die ein den Fördererantrieb steuerndes Aufzeichnungs- und Auswerteelement und Element bildet, **dadurch gekennzeichnet, dass** die Rutsche (1) ein geschlossenes Querschnittsprofil aufweist und die Sensoren in der Rutsche (1) entlang ihrer gesamten Förderstrecke gleichmäßig zwischen Ein- und Austrittsöffnungen verteilt sind, wobei eines der Sensorelemente jedes Sensors, wie ein Sender (2) oder ein Empfänger (3), am Rutschenboden, im horizontalen ebenen Boden der Rutsche (1) und das andere korrespondierende Sensorelement, wie ein Empfänger (3) oder ein Sender (2), in der gegenüberliegenden Wand, im oberen Teil der Rutsche (1) angebracht ist.

2. Rutsche nach Anspruch. 1, **dadurch gekennzeichnet, dass** es elektromagnetische Sensoren, wie: optische Sensoren oder Laser- oder Mikrowellensensoren umfasst.

3. Rutsche nach Anspruch 1, **dadurch gekennzeichnet, dass** es Ultraschallsensoren umfasst.

4. Rutsche nach Anspruch 1, **dadurch gekennzeichnet, dass** der Abstand zwischen den Sensoren den Durchmesser der Basis eines Schüttkegels eines Teils des transportierten Materials im Ruhezustand nicht übersteigt.

5. Rutsche nach Anspruch 1, **dadurch gekennzeichnet, dass** die Seitenwände der Rutsche (1) bzw. deren Unterteile derart geneigt sind, dass diese nach unten konvergieren.

6. Rutsche nach Anspruch 1, **dadurch gekennzeichnet, dass** die Breite der Rutsche (1) in Richtung vom Einlass zum Auslass gleichmäßig abnimmt.

## Revendications

1. Auge de transport du convoyeur vibrant, comportant, monté sur celle-ci, au moins un capteur de type émetteur-récepteur, raccordé pour transmettre des signaux par fil ou sans fil avec un dispositif de microprocesseur constituant un élément enregistrant-analysant et pilotant l'entrainement du transporteur, **caractérisée en ce que** la auge (1) possède un profil fermé, et les capteurs, sont disposés uniformément dans la auge (1) sur tout le trajet de transport, entre l'ouverture d'entrée et de sortie, un des éléments de chaque capteur: l'émetteur (2) ou le récepteur (3), étant monté en bas, dans le fond horizontal et plat de la auge (1), et l'autre élément correspondant du capteur: le récepteur (3) ou l'émetteur (2) étant monté dans la paroi opposée, dans la partie supérieure de la auge (1).

2. Auge selon la revendication 1, **caractérisée en ce qu'**elle comporte des capteurs électromagnétiques: optiques ou laser ou à micro-ondes.

3. Auge selon la revendication 1, **caractérisée en ce qu'**elle comporte des capteurs à ultrasons.

4. Auge selon la revendication 1, **caractérisée en ce que** la distance entre les capteurs ne dépasse pas le diamètre de la base du cône de déversement d'une portion du matériau transporté, au repos.

5. Auge selon la revendication 1, **caractérisée en ce que** les parois latérales de la auge (1) ou leurs parties inférieures sont inclinées de sorte qu'elles sont convergentes vers le bas.

6. Auge selon la revendication 1, **caractérisée en ce que** la largeur de la auge (1) diminue uniformément depuis l'amont en aval.
